# EUROPEAN PATENT SPECIFICATION

(11) **EP 2 038 015 B1**
(45) Date of publication and mention of the grant of the patent: **11.05.2016**
(21) Application number: 06831654.6
(22) Date of filing: 12.07.2006
(51) Int. Cl.: A62B 7/14, B64D 10/00

(54) **A RESPIRATORY GAS SUPPLY CIRCUIT TO FEED CREW MEMBERS AND PASSENGERS OF AN AIRCRAFT WITH OXYGEN**
ATEMGASZUFUHRKREIS ZUR VERSORGUNG VON BESATZUNGSMITGLIEDERN UND PASSAGIEREN EINES FLUGZEUGS MIT SAUERSTOFF
CIRCUIT D'ALIMENTATION EN GAZ RESPIRATOIRE POUR ALIMENTER EN OXYGÈNE LES MEMBRES D'ÉQUIPAGE ET LES PASSAGERS D'UN AÉRONEF

(43) Date of publication of application: 25.03.2009
(73) Proprietor: Zodiac Aerotechnics, 78373 Plaisir Cedex (FR)
(72) Inventor: BLOCH, Nicolas, F-92260 Fontenay-aux-Roses (FR); MAROTTE, Henri, F-92260 Fontenay Aux Roses (FR)
(74) Representative: Cabinet Plasseraud
(86) International application number: PCT/IB2006/003500
(87) International publication number: WO 2008/010021

(56) References cited:
- EP-A- 1 245 250
- EP-A- 1 245 251
- EP-A2- 0 335 356
- DE-A1- 19 921 917
- FR-A- 2 879 938
- JP-A- 3 086 178
- JP-A- 4 138 174
- US-A- 4 889 116
- US-A- 5 372 134
- US-A1- 2004 206 352
- US-A1- 2006 118 115

## Description

The present invention relates to a respiratory gas supply circuit for protecting the passengers and crewmembers of an aircraft against the risks associated with depressurization at high altitude and/or the occurrence of smoke in the cockpit.

To ensure the safety of the passengers and crewmembers in case of a depressurization accident or the occurrence of smoke in the aircraft, aviation regulations require on board all airliners a safety oxygen supply circuit able to supply each passenger and crewmember (also called hereafter end users) with an oxygen flowrate function of the cabin altitude. After a depressurization accident, the cabin altitude reaches a value close to the aircraft altitude. By cabin altitude, one may understand the altitude corresponding to the pressurized atmosphere maintained within the cabin. In a pressurized cabin, this value is different from the aircraft altitude which is its actual physical altitude.

The minimal oxygen flowrate required at a given cabin altitude generally depends the nature of the aircraft, i.e. civil or military, the duration and the level of the protection, i.e. emergency descent, ejection, continuation of flying, ...

A known supply circuit for an aircraft carrying passengers and/or crew members generally comprises:
- a source of breathable gas, e.g. oxygen,
- at least one supply line connected to the source of breathable gas,
- a regulating device connected to the supply line for controlling the supply of breathable gas,
- a mixing device provided on the supply line comprising an ambient air inlet for mixing the ambient air with the breathable gas to provide to passengers and/or crewmembers with a respiratory gas to be inhaled, corresponding to a mixture of breathable gas and ambient air.

The source of breathable gas may be pressurized oxygen cylinders, chemical generators, or On-Board Oxygen Generator System (OBOGS) or more generally any sources of oxygen. The respiratory gas is generally delivered to the passenger or crewmember through a respiratory device that may be a respiratory mask, a cannula or else.

The need to save oxygen on board an aircraft has lead to the development of respiratory masks comprising a demand regulator as well as oxygen dilution with ambient air (through the mixing device). Such demand regulators are known from the documents FR 2,781,381 or FR 2,827,179 disclosing a pneumatic demand regulator, or from WO2006/005372 disclosing an electro-pneumatic demand regulator. If the flowrate inhaled by an end user is generally controlled in such regulators through a feedback loop, the level of oxygen is generally defined through an open loop regulation, taking into account minimum values defined the Federal Aviation Regulation (FAR). The FAR values are indeed conservative values as the resulting levels of oxygen are to be high enough to ensure that the arterial blood saturation SaO₂ in the end users remains high enough. With no proper oxygen levels fed to an end user, SaO₂ may decrease dramatically, resulting in a loss of consciousness. After a few minutes of low SaO₂ levels, irreversible damages may be imparted on the nervous system of the end user, and lead to death.

EP-1 245 250 discloses a respiratory gas supply circuit according to the preamble of claim 1 and a method to supply a respiratory gas in an aircraft according to the preamble of claim 9.

Today, there is still a need for further oxygen savings as, whether the oxygen comes from a generator or a pressurized source, the onboard oxygen mass is directly linked to the estimated needs from passengers and crewmembers. Any optimization of the oxygen supply with their actual needs will result in lighter oxygen sources, and reduced constraints on the aircraft structures and fuel consumption.

Therefore, it would be highly desirable to develop a respiratory gas supply circuit that allows to reduce the breathable gas volume carried onboard or to extend the period before refilling the cylinders (for carried on board O₂). It would be furthermore beneficial to develop such a circuit that provides a breathable gas flowrate adjusted to the actual need of the passenger or crewmember.

To this end, there is provided a respiratory gas supply circuit for an aircraft carrying passengers and crewmembers as claimed in claim 1, and a method of delivering a respiratory gas to passengers and/or crewmembers of an aircraft according to claim 9.

With a regulation on the actual arterial blood oxygen saturation SaO₂, the breathable gas consumption can match the actual needs of an end user. No excessive volume of oxygen is fed, which reduces the need in onboard oxygen sources. This improved regulation allows a control of the supply in breathable gas based on the end user's own metabolism as the measured SaO₂ is a good indication of his/her needs in oxygen.

The above features, and others, will be better understood on reading the following description of particular embodiments, given as non-limiting examples. The description refers to the accompanying drawing.

FIG. 1 is a simplified view of a respiratory gas supply circuit for an aircraft carrying passengers and crewmembers in a first embodiment of the invention;

FIG.2 illustrates an exemplary embodiment of an oxygen emergency system of a plane adapted to deliver a respiratory in a first embodiment of the invention.

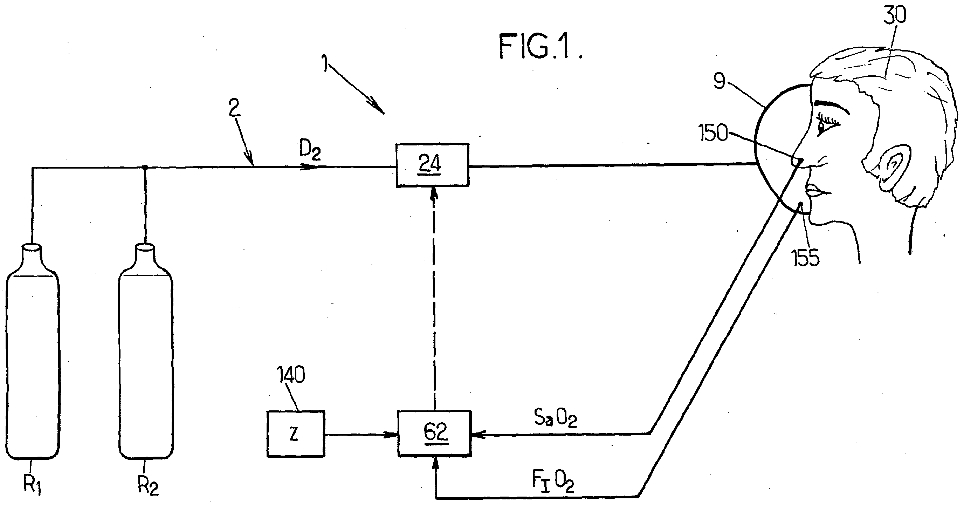

As seen on FIG. 1, the supply circuit according to the invention comprises the hereafter elements. A source of breathable gas, here illustrated as a couple of oxygen tanks R1 and R2 each comprising a reducing valve on their respective outlet, is provided to deliver through a supply line 2 the breathable gas to the passengers and crewmembers 30 of the aircraft. Other sources of breathable gas may be used in the supply circuit according to the invention. Supply line extends to a respiratory device, here illustrated as a respiratory mask 9. An ambient air inlet 10 is provided on the respiratory mask 9, so that ambient air is mixed with the breathable gas within said mask 9 in a mixing device (not shown in FIG. 1). Such a mixing device provides a respiratory gas to be inhaled by the end user and corresponding to the mixture of the breathable gas and ambient air. In the exemplary illustration of FIG. 1, the respiratory gas to be inhaled, or in short inhaled gas, is fed to the crewmember or passenger 30 through the mask 9.

A regulating device 24 is further provided to control the supply in breathable gas to the mask 9. In the supply circuit according to the first implementation of the invention, the regulating device 24 is driven by a control signal F_{I}O₂^{R} function at least of the arterial blood oxygen saturation SaO₂ measured on the passenger or crewmember 30, i.e. the supply circuit end user. The regulating device may be for example an electro-valve.

To that effect an electronic unit 62, or CPU, is provided to elaborate the control signal sent to regulating device 24, as seen in doted lines in FIG. 1.

SaO₂, the ratio of the amount of oxygen transported by the blood to the maximal theoretical amount of gas transportable, is linked to the oxygen partial pressure in the alveoli PaO₂. Under normal circumstances, SaO₂ is about 98% for a person. SaO₂ may be plotted as a function of PaO₂. The resulting curve, best known as the Barcroft Curve or hemoglobin dissociation curve, may vary depending on several factors such as the blood pH (saturation decreasing with pH), the partial pressure of carbon dioxide in the alveoli PaCO₂ (SaO₂ decreases when PaCO₂ increases) and the temperature (SaO₂ decreases when the blood temperature increases). PaO₂ is a difficult datum to measure. SaO₂ is more accessible, notably through a pulse technology based sensor as seen later on. Therefore, the regulation in the system according to the invention is driven by a control signal based on the SaO₂ measured on the end user.

Within the scope of this invention, one may envisage a control signal based on the measured SaO₂ and an SaO₂ set point depending upon the aircraft altitude for example. This type of regulation is nevertheless less efficient in emergency conditions as the bodily functions may vary too slowly.

In a preferred embodiment of the circuit according to the invention, the electronic unit 60 defines a set point F_{I}O₂^{SP} for the breathable gas content F_{I}O₂ at least based on the arterial blood oxygen saturation measured on the end user to control the regulating device 24. Indeed, a more efficient regulation is to control the breathable gas content F_{I}O₂ of the respiratory gas fed to the end user. In known demand regulators, the breathable content is regulated using an open loop with a breathable gas content set point F_{I}O₂^{SP} based on the cabin altitude In the supply circuit, according to the invention, F_{I}O₂^{SP} is derived from the actual SaO₂ measured on the crew member or passenger.

In an improved embodiment of the control circuit according to the invention, a sensor 155 is provided on the supply line downstream the mixing device, i.e. in the example of FIG.1 within the mask 9, to supply the electronic circuit with a signal F_{I}O₂^{M} representative of the breathable gas content F_{I}O₂ in the respiratory or inhaled gas. Sensor 155 allows a feedback loop on the breathable gas content to ensure that the right supply in oxygen follows the actual need from the supply circuit end users when wearing the respiratory device 9.

In order to generate the control signal, the electronic unit 62 compares the set point F_{I}O₂^{SP} to the signal F_{I}O₂^{M} representative of the breathable gas content fed to the passenger or crewmember to elaborate a control signal F_{I}O₂^{R}.

A PID module (proportional, integral, derivative) may be comprised within electronic unit 62 to elaborate the control signal F_{I}O₂^{R} from the comparison of the set point and the measured F_{I}O₂^{M}. When no feed back loop is provided, Electronic unit 62 elaborates the control signal F_{I}O₂^{R} using F_{I}O₂^{SP}.

Whether a feedback loop on the breathable gas content F_{I}O₂ in the inhaled gas is provided or not, the breathable gas content fed to the end user is based on his/her SaO₂, i.e. his/her real need in breathable gas. The conservative values of F_{I}O₂ derived from the regulations (FAR for example) are no longer necessary, resulting in a reduced and optimized oxygen consumption and lighter oxygen sources on board the aircraft.

Sensor 155 when provided with the feedback loop may be an oxygen sensor probe adapted to measure the breathable gas content in the respiratory gas provided downstream the mixing device. Sensor 155 may be for example a galvanic oxygen sensor or an oxygen cell. As an average respiratory cycle lasts about 1 second, it is preferable that the response signal from the sensor 155 is not significantly delayed. Therefore, in a preferred embodiment, a fast sensor is used, with response time of 5Hz, or more, and preferably 10Hz or higher. Thus the response signal is delayed by no more than 100ms.

In order to elaborate the breathable gas content set point FIO₂^{SP}, a second regulation is provided in a preferred embodiment of the invention.

To that effect, a pressure sensor 140 is provided in the cabin of the aircraft to supply CPU 62 with a pressure signal Z representative of the cabin pressure. Pressure sensor 140 measures the cabin pressure (measured in hPa for example), data which is equivalent to the cabin altitude (generally measured in feet) as defined before. The set point SaO₂^{SP} is elaborated by electronic unit 62 based on the minimum regulatory SaO₂ to avoid any risk of hypoxia (reduction of oxygen in tissues below normal levels). This minimum regulatory SaO₂ is notably function of the cabin altitude or pressure.

The pressure sensor 140 may be one of the pressure sensors available in the aircraft, its value being available upon connection to the aircraft bus. In order to ensure a reliable reading of the pressure independent of the aircraft bus system, the circuit according to the invention may be provided with its own pressure sensor, i.e. a dedicated sensor 140 is provided for electronic unit 62.

A SaO₂ sensor 150 is provided on the end user to supply the electronic circuit 62 with a signal SaO₂^{M} representative of his/her arterial blood saturation SaO₂^{M}. In the example of FIG.1, such sensor is provided on the end user nose.

Second sensor 150 is a sensor probe adapted to measure the arterial blood oxygen saturation of the passenger or crewmember. Sensor 150 may be for example a photo-plethysmographic or pulse oximeter (using pulse based technology) sensor. Such sensors work through emitting an infrared (IR) signal through the skin. A thin portion of the human body is necessary, thin enough so that an IR signal can be emitted on one side and read on the opposite side after transmission. Reflexion of the IR emitted signal may also be used, so that the sensor is just pressed against a portion of the skin. This portion may be for example the nose, a finger or an ear. A detection cell on the sensor can read the signal that passed through or is reflected by the body portion, and more specifically thanks to the blood vessels in said body portion. SaO₂ is accessible as the IR absorption rate is linked to SaO₂.

The second sensor 150 may be attached to the respiratory device 9 either in said device 9 as seen in FIG. 1, or around the straps that may be provided on the device as attachments to the end user's head. In the first case, upon donning of the respiratory device 9, sensor 150 comes into contact with the user's nose so that the light source faces the nose or the skin around the nose. In the second case, the body portion may be any portion of an ear such as the ear lob. Another possibility, though less interesting, would be a finger, but this requires a voluntary donning of the sensor 150 on the finger, which may be not practical in case of emergency.

In the system according to the invention, the electronic circuit 62 compares the arterial blood oxygen saturation set point SaO₂^{SP} to the measured SaO₂^{M} to elaborate the breathable gas content set point F_{I}O₂^{SP}. For example, when SaO₂ decreases rapidly after a sudden depressurization accident, the measured SaO₂ departs from the SaO₂ set point at the aircraft altitude (with the depressurization accident, the cabin altitude tends to equal the aircraft altitude). As more oxygen is needed, CPU 62 defines a higher F_{I}O₂^{SP} from the comparison of SaO₂^{M} and SaO₂^{SP}. The regulation on the breathable gas content allows consequently a higher F_{I}O₂ fed to the end user to cope with the lack of oxygen in the end user body. Such level of breathable gas content is adapted to the end user real needs.

In the present illustration, the regulating device 24 drives the breathable gas supply to one mask 9. The man skilled in the art will easily transpose the teachings of the present invention to a regulation device regulating the supply in breathable gas to a cluster of respiratory devices 9 thanks to a control signal corresponding to the average SaO₂ measured through each sensor 150 provided with each respiratory device 9.

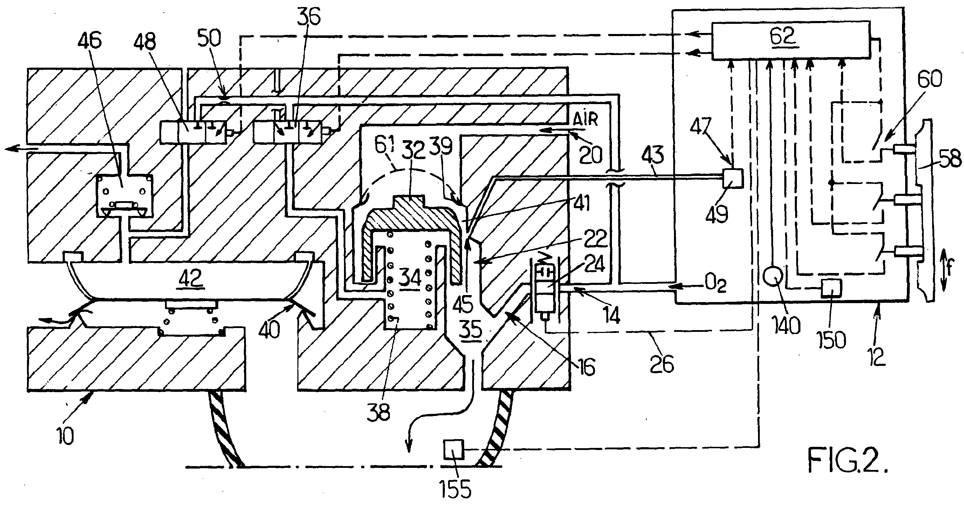

FIG.2 illustrates an exemplary embodiment of the system according to the invention, and more specifically a demand regulator comprising the regulating device, as known from WO2006/005372, and used by a crew member. This system corresponds to a system with no feedback loop on the breathable gas content.

The regulator comprises two portions, one portion 10 incorporated in a housing carried by a mask (not shown) and the other portion 12 carried by a storage box for storing the mask. The box may be conventional in general structure, being closed by doors and having the mask projecting therefrom. Opening the doors by extracting the mask causes an oxygen supply valve to open.

The portion 10 carried by the mask is constituted by a housing comprising a plurality of assembled together parts having recesses and passages formed therein for defining a plurality of flow paths.

A first flow path connects an inlet 14 for oxygen to an outlet 16 leading to the mask. A second path, or air flow path, connects an inlet 20 for dilution air to an outlet 22 leading to the mask. The flowrate of oxygen along the first path is controlled by a regulating device 24, here an electrically-controlled valve. In the example of FIG. 2, this valve is a proportional valve 24 under voltage control connecting the inlet 14 to the outlet 16 and powered by a conductor 26. It would also be possible to use an on/off type solenoid valve, controlled using pulse width modulation at a variable duty ratio.

A "demand" subassembly is interposed on the air flow path for allowing dilution air to flow into the mask, said subassembly acting to conduct ambient air and to measure the instantaneous demanded flowrate or any other type of remotely controlled actuator.

In the example shown, the right section of the dilution air flow path is defined by an internal surface 33 of the housing, and the end edge of a piston 32 slidingly mounted in the housing. The piston is subjected to the pressure difference between atmospheric pressure and the pressure that exists inside a chamber 34. An additional electrically-controlled valve 36 (specifically a solenoid valve) serves to connect the chamber 34 either to the atmosphere or else to the source of oxygen at a higher pressure level than the atmosphere. The electrically-controlled valve 36 thus serves to switch from normal mode with dilution to a mode in which pure oxygen is supplied (so-called "100%" mode). When the chamber 34 is connected to the atmosphere, a spring 38 holds the piston 32 on seat 39 but allows the piston 32 to separate from the seat 39, when the mask wearer inhales a respiratory gas intake, so that air passes through the air flow path to the mixing device, here mixing chamber 35, where air is mixed with the incoming oxygen from the first flow path. When chamber 34 is connected to the oxygen supply, piston 32 presses against the seat 39, and thereby prevents air from passing through. Piston 32 can also be used as the moving member of a servo-controlled regulator valve. In general, regulators are designed to make it possible not only to perform normal operation with dilution, but also emergency positions thanks to selector 58.

The air flow path comprises a Venturi constriction 41, between piston 32 and the housing of the portion 10, and more specifically the mixing chamber 35. The Venturi constriction 41 has, for example, a section of 0.57 mm2. This section has been determined according to a particular mask model and can be changed for other mask models. A capillary duct 43 having an inlet port 45 is connected to the Venturi constriction 41 and an outlet port 47 is connected to a pressure sensor 49. The pressure sensor 49 measures the air pressure in the Venturi constriction 41 through the capillary duct 43. The signal from the pressure sensor 49 is transmitted to an electronic unit, here the electronic circuit card 62.

Portion 10 housing also defines a breathe-out path including an exhalation or breathe-out valve 40. The shutter element of the valve 40 shown is of a type that is in widespread use at present for performing the two functions of acting both as a valve for piloting admission and as an exhaust valve. In the embodiment shown, it acts solely as a breathe-out valve while making it possible for the inside of the mask to be maintained at a pressure that is higher than the pressure of the surrounding atmosphere by increasing the pressure that exists in a chamber 42 defined by the valve 40 to a pressure higher than ambient pressure.

In a first state, an electrically-controlled valve 48 (specifically a solenoid valve) connects the chamber 42 to the atmosphere, in which case breathing occurs as soon as the pressure in the mask exceeds ambient pressure. In a second state, the valve 48 connects the chamber 42 to the oxygen feed via a flowrate-limiting constriction 50. Under such circumstances, the pressure inside the chamber 42 takes up a value which is determined by relief valve 46 having a rate closure spring.

Portion 10 housing may further carry means enabling a pneumatic harness of the mask to be inflated and deflated. These means are of conventional structure and consequently they are not shown nor described.

As illustrated in FIG. 2, a selector 58 may be provided to close a normal mode switch 60. As shown by arrow f, selector 58 allows to select the different operating modes: normal mode with dilution, 100% 02 mode or emergency mode (O2 with over pressure).

The switches are connected to the electronic circuit 62 which operates, as a function of the selected operating mode, in response to the cabin altitude as indicated by the sensor 140 (in the example of FIG. 2 provided within storage box 12), to the aircraft altitude and to the instantaneous flow rate being demanded as indicated by the pressure sensor 49 to determine the rate at which to supply oxygen to the wearer of the mask.

In the system according to the invention, the electronic circuit further takes into account the signal SaO₂^{M} representative of the arterial blood oxygen saturation and provided by sensor 150 located downstream mixing chamber 35.

The electronic circuit card 62 provides appropriate electrical signals, i.e. the control signal, to the first electrically-controlled valve 24 as follows. In normal mode, the pressure sensor 49 supplies the instantaneous demand pressure in the outlet 22 of the air flow path, filtered through the filter 61, into the mask (see continuous line in FIG.2). The electronic circuit 62 receives this signal together with information concerning the altitude of the cabin that needs to be taken into account and that comes from the sensor 140. The electronic circuit further receives a signal corresponding to the aircraft altitude (e.g. signal taken from the aircraft bus system).

The electronic circuit 62 then determines the SaO₂ set point SaO₂ ^{SP} based at least on the cabin pressure measured with sensor 140. As mentioned earlier, the electronic circuit 62 then compares the set point to the actual SaO₂ measured by oxygen sensor 150 and generates a breathable gas content set point F_{I}O₂^{SP}. Electronic circuit 62 then elaborate the control signal F_{I}O₂^{R} to drive electrically controlled valve 24 that delivers the proper level of oxygen in the inhaled gas.

When a feedback loop on F_{I}O₂ is implemented, the demand subassembly is not required. Pressure sensor 49 is only used to detect the breath-in/breath-out cycle as oxygen is only needed when the end user breathes in. Electronic circuit 62 thus allows to drive the opening and closing of the valve 24 as well as its opening /closing speed.

## Claims

1. A respiratory gas supply circuit (1) for an aircraft carrying passengers and crewmembers (30), comprising:
- a source of breathable gas (R1, R2),
- at least one supply line (2) connected to said source,
- a regulating device (24) provided on said supply line for controlling the supply of breathable gas, and driven by a control signal (F_{|}O₂^{R}) function at least of the arterial blood oxygen saturation (SaO₂) measured on at least one passenger or crewmember,
- an electronic unit such as an electronic circuit (62) defining a breathable gas content set point (F_{I}O₂^{SP}) at least based on the measured arterial blood oxygen saturation,
- a mixing device (9) connected to said supply line, said mixing device further comprising an ambient air inlet (10) for mixing said ambient air with said breathable gas to provide to said at least one passenger or crewmember a respiratory gas to be inhaled, corresponding to a mixture of said breathable gas and ambient air,
**characterized in that** a first sensor (155) is provided downstream the mixing device to supply the electronic circuit with a signal (F_{I}O₂^{M}) representative of the breathable gas content in the gas to be inhaled, and the electronic unit compares the breathable gas content set point to the signal representative of the breathable gas content to elaborate the control signal.

2. A circuit according to claim 1, wherein the aircraft comprises a cabin, and wherein the electronic unit defines an arterial blood oxygen saturation set point (SaO₂^{SP}) at least based on the cabin pressure.

3. A circuit according to claim 2, wherein a second sensor (150) is provided on the at least one passenger or crewmember to supply the electronic circuit with a signal (SaO₂^{M}) representative of the arterial blood saturation in said one passenger or crewmember.

4. A circuit according to claim 3, wherein the electronic unit compares the arterial blood oxygen saturation set point to the signal representative of the arterial blood saturation to elaborate the breathable gas content set point.

5. A circuit according to one of the previous claims 3 and 4, wherein the second sensor is a photo-plethysmographic sensor (150).

6. A circuit according to one of the previous claims 3 to 5, wherein a respiratory mask (9) is provided downstream the respiratory gas circuit, said respiratory mask carrying the second sensor, so that said second sensor comes into contact with the passenger or crew member's slan upon donning of said respiratory mask.

7. A circuit according to one of the previous claims 1 to 6, wherein the regulating device and the mixing device are comprised in the demand regulator of a respiratory mask.

8. A circuit according to the previous claims 6 or 7, wherein the respiratory mask is provided with straps for donning of said respiratory mask on the passenger or crewmember, the sensor being adapted on said straps to come into contact with said passenger or crewmember's ear upon donning of the mask.

9. A method to supply a respiratory gas in an aircraft carrying passengers and crewmembers (30), said aircraft comprising:
- a source of breathable gas (R1, R2),
- at least one supply line (2) connected to said source,
- a regulating device (24) provided on said supply line for controlling the supply of breathable gas,
- a mixing device (9) connected to said supply line, said mixing device further comprising an ambient air inlet (10) for mixing said ambient air with said breathable gas to provide to at least one passenger or crewmember a respiratory gas to be inhaled, corresponding to a mixture of said breathable gas and ambient air,
said method comprising the steps of:
- measuring the arterial blood oxygen saturation (SaO₂) on said at least one passenger or crewmember,
- defining a breathable gas content set point (F_{I}O₂^{SP)} at least based on the measured arterial blood oxygen saturation - providing a control signal to drive said regulating device, said control signal being at least based on said arterial blood oxygen saturation.
**characterized in that** a first sensor (155) is provided downstream the mixing device, said method further comprising the steps of:
- measuring with said first sensor a signal (F_{I}O₂^{M}) representative of the breathable gas content in the respiratory gas,
- comparing the breathable gas content set point to the signal representative of the breathable gas content to elaborate the control signal.

10. A method according to claim 9, wherein the aircraft comprises a cabin, said method further comprising the step of defining an arterial blood oxygen saturation set point (SaO₂^{SP}) at least based on the cabin pressure.

11. A method according to the previous claim, wherein a second sensor (150) is provided on the at least one passenger or crewmember, said method further comprising the step of measuring a signal (SaO₂^{M}) representative of the arterial blood saturation in said one passenger or crewmember.

12. A method according to claim 11, further comprising the step of comparing the arterial blood oxygen saturation set point to the signal representative of the arterial blood saturation to elaborate the breathable gas content set point.

## Patentansprüche

1. Atemgas-Versorgungsschaltung (1) für ein Luftfahrzeug, das Passagiere und Besatzungsmitglieder (30) trägt, umfassend:
- eine Quelle von atembaren Gas (R1, R2),
- mindestens eine Versorgungsleitung (2), die mit der Quelle verbunden ist,
- eine Regelvorrichtung (24), die an der Versorgungsleitung zur Steuerung der Versorgung von atembaren Gas bereitgestellt ist und von einer Funktion eines Steuerungssignals (F_{I}O₂^{R}) von mindestens der Sauerstoffsättigung (SaO₂) des arteriellen Blutes, die an mindestens einem Passagier oder Besatzungsmitglied gemessen wird, angetrieben wird,
- eine elektronische Einheit, wie eine elektronische Schaltung (62), die einen atembaren Gasinhalt-Sollwert (F_{I}O₂^{SP}) definiert, der mindestens auf der gemessenen Sauerstoffsättigung des arteriellen Blutes basiert,
- eine Mischvorrichtung (9), die mit der Versorgungsleitung verbunden ist, wobei die Mischvorrichtung weiter einen Umgebungsluft-Einlass (10) zur Mischung der Umgebungsluft mit dem atembaren Gas umfasst, um dem mindestens einen Passagier oder Besatzungsmitglied ein zu inhalierendes Atemgas bereitstellt, das einer Mischung aus dem atembaren Gas und Umgebungsluft entspricht,
**dadurch gekennzeichnet, dass** ein erster Sensor (155) stromabwärts von der Mischvorrichtung bereitgestellt ist, um die elektronische Schaltung mit einem Signal (F_{I}O₂^{M}) zu versorgen, das repräsentativ für den atembaren Gasinhalt in dem zu inhalierenden Gas ist, und die elektronische Einheit den atembaren Gasinhalt-Sollwert mit dem Signal, das repräsentativ für den atembaren Gasinhalt ist, vergleicht, um das Steuerungssignal zu ermitteln.

2. Schaltung nach Anspruch 1, wobei das Luftfahrzeug eine Kabine umfasst und wobei die elektronische Einheit einen Sauerstoffsättigungs-Sollwert (SaO₂^{SP}) des arteriellen Blutes definiert, der mindestens auf dem Kabinendruck basiert.

3. Schaltung nach Anspruch 2, wobei ein zweiter Sensor (150) an dem mindestens einen Passagier oder Besatzungsmitglied bereitgestellt ist, um die elektronische Schaltung mit einem Signal (SaO₂^{M}) zu versorgen, das repräsentativ für die Sättigung des arteriellen Blutes in dem einen Passagier oder Besatzungsmitglied ist.

4. Schaltung nach Anspruch 3, wobei die elektronische Einheit den Sauerstoffsättigungs-Sollwert des arteriellen Blutes mit dem Signal vergleicht, das repräsentativ für die Sättigung des arteriellen Blutes ist, um den atembaren Gasinhalt-Sollwert zu ermitteln.

5. Schaltung nach einem der vorherigen Ansprüche 3 und 4, wobei der zweite Sensor ein photo-plethysmografischer Sensor (150) ist.

6. Schaltung nach einem der vorherigen Ansprüche 3 bis 5, wobei eine Atemmaske (9) stromabwärts von dem Atemgaskreis bereitgestellt ist, wobei die Atemmaske den zweiten Sensor trägt, sodass der zweite Sensor beim Aufsetzen der Atemmaske in Kontakt mit der Nase des Passagiers oder des Besatzungsmitglieds kommt.

7. Schaltung nach einem der vorherigen Ansprüche 1 bis 6, wobei die Regelvorrichtung und die Mischvorrichtung in dem Bedarfsregler einer Atemmaske umfasst sind.

8. Schaltung nach den vorherigen Ansprüche 6 oder 7, wobei die Atemmaske mit Schlaufen zum Aufsetzen der Atemmaske auf den Passagier oder das Besatzungsmitglied ausgestattet ist, wobei der Sensor an den Schlaufen ausgebildet ist, um beim Aufsetzen der Maske in Kontakt mit dem Ohr des Passagiers oder Besatzungsmitglieds zu kommen.

9. Verfahren zur Versorgung eines Atemgases in einem Luftfahrzeug, das Passagiere und Besatzungsmitglieder (30) trägt, wobei das Luftfahrzeug umfasst:
- eine Quelle von atembaren Gas (R1, R2),
- mindestens eine Versorgungsleitung (2), die mit der Quelle verbunden ist,
- eine Regelvorrichtung (24), die an der Versorgungsleitung zur Steuerung der Versorgung von atembaren Gas bereitgestellt ist,
- eine Mischvorrichtung (9), die mit der Versorgungsleitung verbunden ist, wobei die Mischvorrichtung weiter einen Umgebungsluft-Einlass (10) zur Mischung der Umgebungsluft mit dem atembaren Gas umfasst, um dem mindestens einen Passagier oder Besatzungsmitglied ein zu inhalierendes Atemgas bereitstellt, das einer Mischung aus dem atembaren Gas und Umgebungsluft entspricht,
wobei das Verfahren die Schritte umfasst:
- Messen der Sauerstoffsättigung (SaO₂) des arteriellen Blutes an dem mindestens einen Passagier oder Besatzungsmitglied,
- Definieren eines atembaren Gasinhalt-Sollwerts (F_{I}O₂^{SP}), der mindestens auf der gemessenen Sauerstoffsättigung des arteriellen Blutes basiert,
- Bereitstellen eines Steuerungssignals, um die Regelvorrichtung anzutreiben, wobei das Steuerungssignal mindestens auf der Sauerstoffsättigung des arteriellen Blutes basiert,
**dadurch gekennzeichnet, dass** ein erster Sensor (155) stromabwärts von der Mischvorrichtung bereitgestellt ist, wobei das Verfahren weiter die Schritte umfasst:
- Messen eines Signals (F_{I}O₂^{m}) mit dem ersten Sensor, das repräsentativ für den atembaren Gasinhalt in dem Atemgas ist,
- Vergleichen des atembaren Gasinhalt-Sollwerts mit dem Signal, das repräsentativ für den atembaren Gasinhalt ist, um das Steuerungssignal zu ermitteln.

10. Verfahren nach Anspruch 9, wobei das Luftfahrzeug eine Kabine umfasst, wobei das Verfahren weiter den Schritt des Definierens eines Sauerstoffsättigungs-Sollwerts (SaO₂^{SP}) des arteriellen Blutes umfasst, der mindestens auf dem Kabinendruck basiert.

11. Verfahren nach dem vorherigen Anspruch, wobei ein zweiter Sensor (150) an dem mindestens einen Passagier oder Besatzungsmitglied bereitgestellt ist, wobei das Verfahren weiter den Schritt des Messens eines Signals (SaO₂^{M}) umfasst, das repräsentativ für die Sättigung des arteriellen Blutes in dem einen Passagier oder Besatzungsmitglied ist.

12. Verfahren nach Anspruch 11, weiter umfassend den Schritt des Vergleichens des Sauerstoffsättigungs-Sollwerts des arteriellen Blutes mit dem Signal, das repräsentativ für die Sättigung des arteriellen Blutes ist, um den atembaren Gasinhalt-Sollwert zu ermitteln.

## Revendications

1. Circuit d'alimentation en gaz respiratoire (1) pour un aéronef transportant des passagers et des membres d'équipage (30), comprenant :
- une source de gaz pouvant être inspiré (R1, R2),
- au moins une conduite d'alimentation (2) raccordée à ladite source,
- un dispositif de régulation (24) prévu sur ladite conduite d'alimentation pour commander l'alimentation en gaz pouvant être inspiré, et excité par un signal de commande (F_{I}O₂^{R}) en fonction au moins de la saturation en oxygène de sang artériel (SaO₂) mesurée sur au moins un passager ou membre d'équipage ,
- une unité électronique telle qu'un circuit électronique (62) définissant un point de consigne de contenu en gaz pouvant être inspiré (F_{I}O₂^{SP}) au moins en fonction de la saturation en oxygène de sang artériel mesurée,
- un dispositif de mélange (9) raccordé à ladite conduite d'alimentation, ledit dispositif de mélange comprenant en outre une entrée d'air ambiant (10) pour mélanger ledit air ambiant avec ledit gaz pouvant être inspiré pour fournir audit au moins un passager ou membre d'équipage un gaz respiratoire destiné à être inhalé, correspondant à un mélange dudit gaz pouvant être inspiré et dudit air ambiant,
**caractérisé en ce qu'**un premier capteur (155) est prévu en aval du dispositif de mélange pour fournir au circuit électronique un signal (F_{I}O₂^{M}) représentatif du contenu en gaz pouvant être inspiré dans le gaz destiné à être inhalé, et l'unité électronique compare le point de consigne de contenu en gaz pouvant être inspiré au signal représentatif du contenu en gaz pouvant être inspiré pour élaborer le signal de commande.

2. Circuit selon la revendication 1, dans lequel l'aéronef comprend une cabine, et dans lequel l'unité électronique définit un point de consigne de saturation en oxygène de sang artériel (SaO₂^{SP}) au moins en fonction de la pression de cabine.

3. Circuit selon la revendication 2, dans lequel un second capteur (150) est prévu sur l'au moins un passager ou membre d'équipage pour fournir au circuit électronique un signal (SaO₂^{M}) représentatif de la saturation de sang artériel chez ledit un passager ou membre d'équipage.

4. Circuit selon la revendication 3, dans lequel l'unité électronique compare le point de consigne de saturation en oxygène de sang artériel au signal représentatif de la saturation de sang artériel pour élaborer le point de consigne de contenu en gaz pouvant être inspiré.

5. Circuit selon l'une des revendications précédentes 3 et 4, dans lequel le second capteur est un capteur photo-pléthysmographique (150).

6. Circuit selon l'une des revendications précédentes 3 à 5, dans lequel un masque respiratoire (9) est prévu en aval du circuit de gaz respiratoire, ledit masque respiratoire portant le second capteur, pour que ledit second capteur entre en contact avec le nez du passager ou membre d'équipage lors du port dudit masque respiratoire.

7. Circuit selon l'une des revendications précédentes 1 à 6, dans lequel le dispositif de régulation et le dispositif de mélange sont compris dans le régulateur de demande d'un masque respiratoire.

8. Circuit selon les revendications précédentes 6 ou 7, dans lequel le masque respiratoire est pourvu de sangles pour le port dudit masque respiratoire sur le passager ou membre d'équipage, le capteur étant adapté sur lesdites sangles pour entrer en contact avec l'oreille dudit passager ou membre d'équipage lors du port du masque.

9. Procédé pour fournir un gaz respiratoire dans un aéronef transportant des passagers et des membres d'équipage (30), ledit aéronef comprenant :
- une source de gaz pouvant être inspiré (R1, R2),
- au moins une conduite d'alimentation (2) raccordée à ladite source,
- un dispositif de régulation (24) prévu sur ladite conduite d'alimentation pour commander l'alimentation en gaz pouvant être inspiré,
- un dispositif de mélange (9) raccordé à ladite conduite d'alimentation, ledit dispositif de mélange comprenant en outre une entrée d'air ambiant (10) pour mélanger ledit air ambiant avec ledit gaz pouvant être inspiré pour fournir à au moins un passager ou membre d'équipage un gaz respiratoire destiné à être inhalé, correspondant à un mélange dudit gaz pouvant être inspiré et dudit air ambiant,
ledit procédé comprenant les étapes de :
- la mesure de la saturation en oxygène de sang artériel (SaO₂) chez ledit au moins un passager ou membre d'équipage,
- la définition d'un point de consigne de contenu en gaz pouvant être inspiré (F_{I}O₂^{SP}) au moins en fonction de la saturation en oxygène de sang artériel mesurée,
- la fourniture d'un signal de commande, pour exciter ledit dispositif de régulation, ledit signal de commande étant au moins fondé sur ladite saturation en oxygène de sang artériel,
**caractérisé en ce qu'**un premier capteur (155) est prévu en aval du dispositif de mélange, ledit procédé comprenant en outre les étapes de :
- la mesure, avec ledit premier capteur, d'un signal (F_{I}O₂^{M}) représentatif du contenu en gaz pouvant être inspiré dans le gaz respiratoire,
- la comparaison du point de consigne de contenu en gaz pouvant être inspiré au signal représentatif du contenu en gaz pouvant être inspiré pour élaborer le signal de commande.

10. Procédé selon la revendication 9, dans lequel l'aéronef comprend une cabine, ledit procédé comprenant en outre l'étape de la définition d'un point de consigne de saturation en oxygène de sang artériel (SaO₂^{SP}) au moins en fonction de la pression de cabine.

11. Procédé selon la revendication précédente, dans lequel un second capteur (150) est prévu sur l'au moins un passager ou membre d'équipage, ledit procédé comprenant en outre l'étape de la mesure d'un signal (SaO₂^{M}) représentatif de la saturation de sang artériel chez ledit passager ou membre d'équipage.

12. Procédé selon la revendication 11, comprenant en outre l'étape de la comparaison du point de consigne de saturation en oxygène de sang artériel au signal représentatif de la saturation de sang artériel pour élaborer le point de consigne de contenu en gaz pouvant être inspiré.
